# EUROPEAN PATENT APPLICATION

(11) **EP 2 000 773 A2**
(43) Date of publication of application: **10.12.2008**
(21) Application number: 08156649.9
(22) Date of filing: 21.05.2008
(51) Int. Cl.: G01C 21/34

(54) **Navigation apparatus and program**

(30) Priority: 06.06.2007 JP 2007150235
(71) Applicant: Aisin AW Co., Ltd., Fuji-cho Anjo-shi Aichi 444-1192 (JP)
(72) Inventor: Nakayama, Takaaki, Okazaki-shi Aichi 444-8564 (JP)
(74) Representative: TBK-Patent

(57) **Abstract**

A navigation apparatus performs speech guidance at a guidance branch point on a route by using plural types of speech guidance information which have priority levels assigned thereto. The navigation apparatus includes a determination unit that determines whether a vehicle provided with the navigation apparatus has traveled through the guidance branch point, a learning unit which adds up, for each piece of speech guidance information, the number of times the vehicle has traveled through the guidance branch point in accordance with the speech guidance, and which learns a probability that the vehicle has traveled in accordance with the speech guidance, and a control unit that changes priority levels of pieces of the speech guidance information on the basis of a result of the learning by the learning unit.

## Description

### INCORPORATION BY REFERENCE

The disclosure of Japanese Patent Application No. 2007-150235 filed on June 6, 2007, including the specification, drawings and abstract thereof, is incorporated herein by reference in its entirety.

### BACKGROUND OF THE INVENTION

### 1. Field of the Invention

The present invention relates to a navigation apparatus capable of changing priority levels of pieces of speech guidance information to be given for a guidance branch point.

### 2. Description of the Related Art

In the related art, in speech branch-point guidance by a navigation apparatus, by providing guidance using an additional phrase such as a landmark institution name, an intersection name, or a feature, and, when there is an obstacle between a landmark institution and the position of a vehicle provided with the navigation apparatus, by changing landmark information, a driver of the vehicle can easily travel appropriately through a guidance branch point (see, for example, Japanese Unexamined Patent Application Publication No. 2003-57048).

### SUMMARY OF THE INVENTION

In a navigation apparatus of the related art, additional phrases for speech guidance for branch points are determined on the basis of predetermined priority levels. However, easy-to-understand additional phrases for speech guidance are not always identical for all drivers. Even if there is an easy-to-understand additional phrase for a driver, another additional phrase having a higher priority level may be used for speech guidance.

The present invention is intended to solve the above-described problem. It is an object of the present invention to enable speech guidance to be given by using guidance information according to each driver.

According to an aspect of the present invention, there is provided a navigation apparatus for performing speech guidance at a guidance branch point on a route by using plural types of speech guidance information which have priority levels assigned thereto. The navigation apparatus includes determination means for determining whether or not a vehicle provided with the navigation apparatus traveled through the guidance branch point in accordance with the speech guidance, learning means for adding up, for each type of speech guidance information, the number of times the determination means has determined that the vehicle traveled through the guidance branch point in accordance with the speech guidance, or the number of times the determination means has determined that the vehicle did not travel through the guidance branch point in accordance with the speech guidance, and performing learning of a percentage of times that the vehicle has traveled in accordance with the speech guidance, and control means for changing the priority levels of the types of speech guidance information on the basis of a result of the learning by the learning means.

According to another aspect of the present invention, there is provided a program for controlling a navigation apparatus for performing speech guidance at a guidance branch point on a route by using plural types of speech guidance information which have priority levels thereto. The program causes a computer to execute the steps of: determining whether or not a vehicle provided with the navigation apparatus traveled through the guidance branch point in accordance with the speech guidance; for each type of speech guidance information, adding up the number of times it has been determined that the vehicle traveled through the guidance branch point in accordance with the speech guidance, or the number of times it has been determined that the vehicle did not travel through the guidance branch point in accordance with the speech guidance, and performing learning of a percentage of times that the vehicle has traveled in accordance with the speech guidance; and changing the priority levels of the types of speech guidance information on the basis of a result of the learning.

The present invention performs learning about whether a vehicle traveled through a guidance branch point in accordance with guidance, and changes priority levels of pieces of speech guidance information on the basis of the result of learning. Thus, speech guidance can be performed by using guidance information that meets the driver's preference.

### BRIEF DESCRIPTION OF THE DRAWINGS

Fig. 1 is a block diagram showing the configuration of a navigation apparatus according to an embodiment of the present invention.

Fig. 2 is an illustration showing learning of details of speech guidance.

Figs. 3A and 3B are illustrations showing types of speech guidance and a learning result.

Fig. 4 is a flowchart illustrating learning of details of speech guidance and a priority level changing process.

### DESCRIPTION OF THE PREFERRED EMBODIMENTS

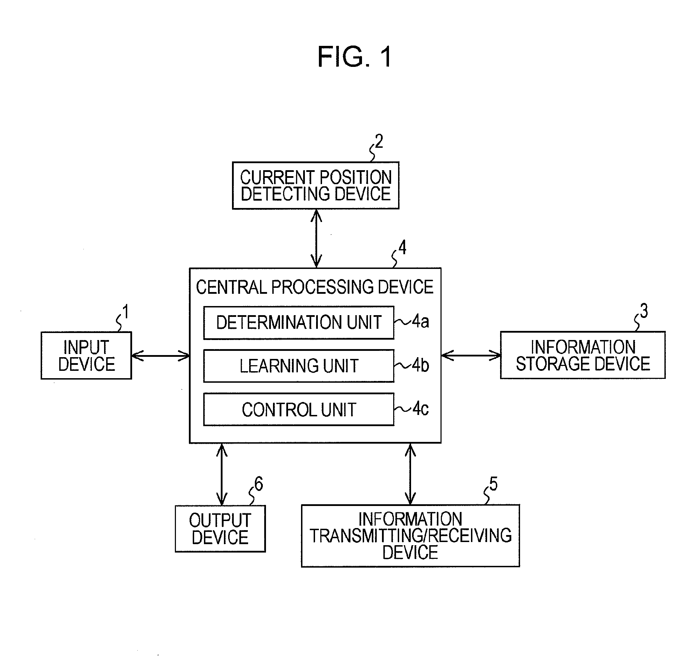

An embodiment of the present invention will be described below. Fig. 1 shows an example of a navigation apparatus according to the embodiment. The navigation apparatus includes an input device 1 for inputting route guidance information such as a departure place and a destination, a current position detecting device 2 for detecting information concerning a current position of a vehicle provided with the navigation apparatus, an information storage device 3 storing map data, navigation data necessary for route searching, display/speech-guidance data necessary for route searching, programs (applications and/or an operating system (OS)) for performing guidance such as display of maps, route searching, and speech guidance, etc., a determination unit 4a that determines whether the vehicle traveled through a guidance branch point in accordance with speech guidance, a learning unit 4b which adds up, for each piece of speech guidance information, the number of times the vehicle has traveled through the guidance branch point in accordance with the speech guidance, and which learns a percentage of times that the vehicle has traveled in accordance with the speech guidance, and a control unit 4c for changing priority levels of pieces of the speech guidance information on the basis of a result of the learning. The navigation apparatus also includes a central processing device 4, as means of navigation processing, for performing a map display process, a route search process, a display/speech guidance process necessary for route guidance, and overall control of the system, an information transmitting/receiving device 5 for transmitting and receiving vehicle travelling information such as road information or traffic information, detecting information concerning the current position of the vehicle, and transmitting and receiving current position information, and an output device 6, including a display and a speaker, for outputting route guidance information.

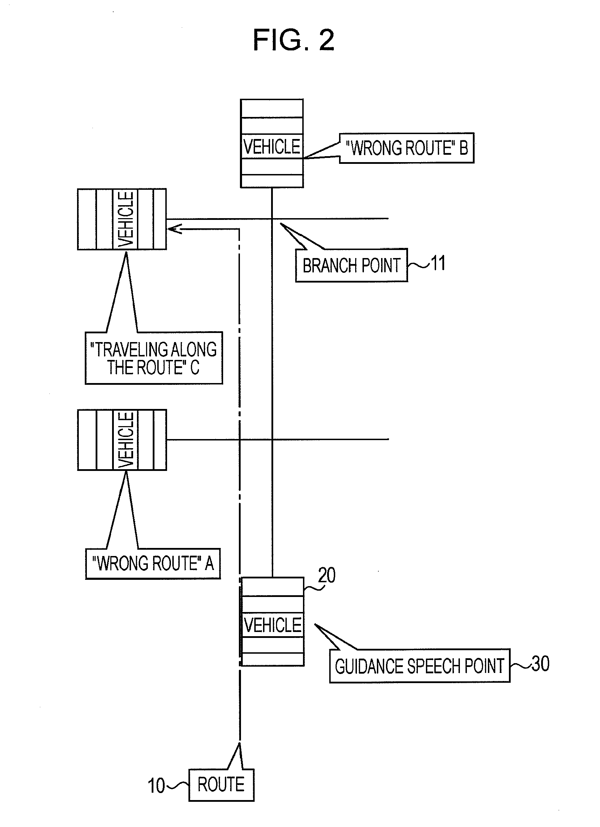

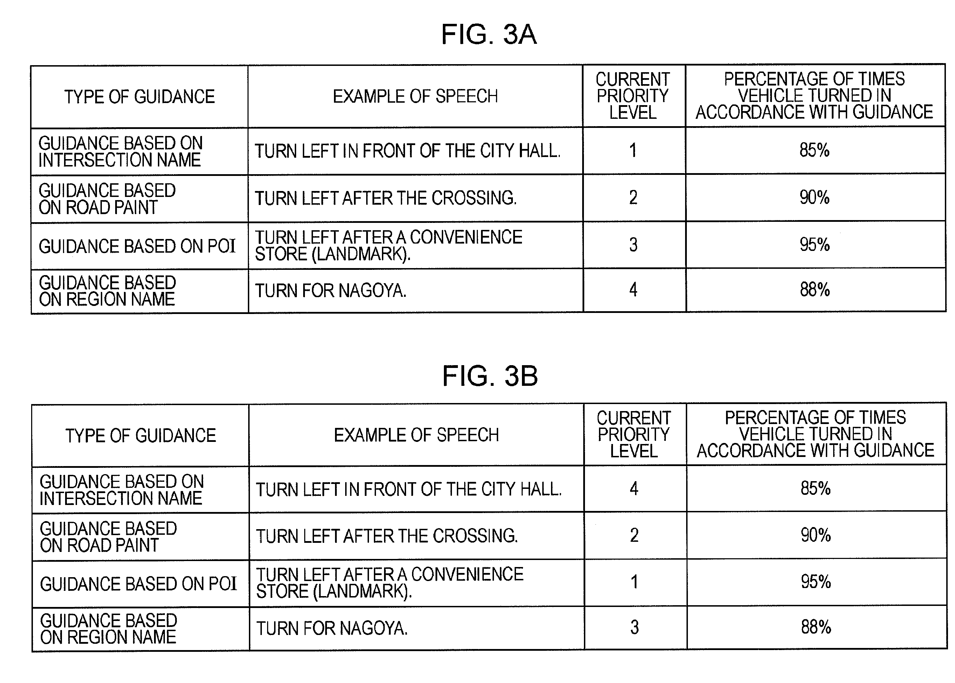

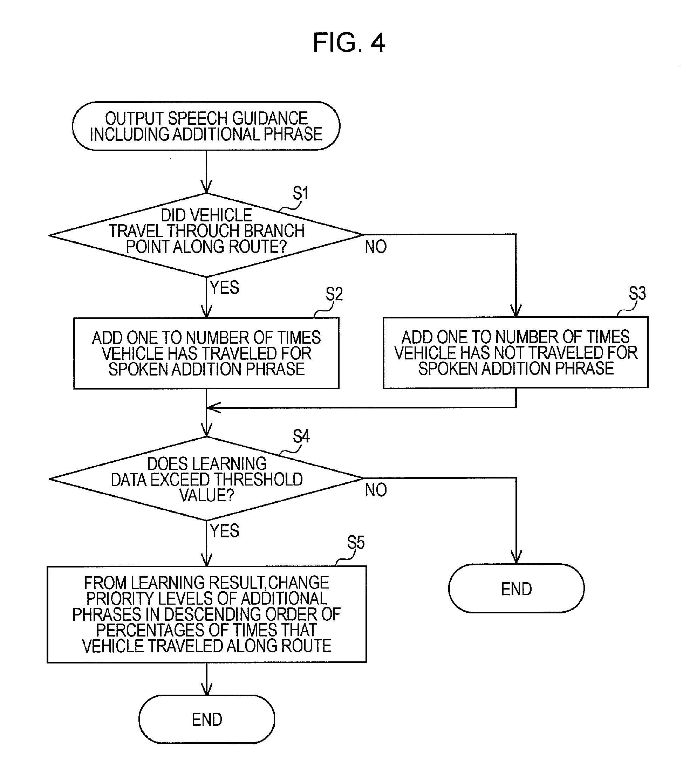

Next, a process for changing priority levels of pieces of speech guidance information will be described below with reference to Fig. 2 that illustrates learning of details of speech guidance, Figs. 3A and 3B that show types of speech guidance and a learning result, and Fig. 4 that illustrates learning of details of speech guidance and a priority level changing process.

Referring to Fig. 2, a route 10, indicated by a dotted-chain line, denotes a guidance route (to a destination) searched for by the central processing device 4. The route 10 turns left at a guidance branch point 11. When a vehicle 20 reaches a guidance speech point 30 positioned a predetermined distance (for example, 600 m or 300 m) before the guidance branch point 11, the navigation apparatus performs speech guidance including an additional phrase that recommends turning left at the guidance branch point 11. As shown in Figs. 3A and 3B, the navigation apparatus performs speech guidance based on an intersection name, such as "TURN LEFT IN FRONT OF THE CITY HALL", speech guidance based on road markings (feature), such as "TURN LEFT AFTER THE CROSSING", speech guidance based on a point-of-interest (POI) landmark, such as "TURN LEFT AFTER A CONVENIENCE STORE (LANDMARK)", or speech guidance based on a region name, such as "TURN LEFT FOR NAGOYA".

When the navigation apparatus performs the speech guidance including one of the above examples of speech guidance, the determination unit 4a determines whether the status of the vehicle 20 was one of statuses: "WRONG ROUTE" A (the vehicle 20 turned left before the guidance branch point 11); "WRONG ROUTE" B (the vehicle 20 passed beyond the guidance branch point 11), and "TRAVELING ALONG THE ROUTE" C (the vehicle 20 turned left at the guidance branch point 11). Determination of whether the vehicle 20 traveled along the route 10 is performed, for example, on the basis of whether the central processing device 4 performed re-searching before and after the vehicle 20 passed beyond the guidance branch point 11, or on the basis of whether the current position detected by the current position detecting device 2, or the current position received by the information transmitting/receiving device 5 lies on the route 10. As described above, for various routes, various guidance branch points are set. For each type of speech guidance, the number of times the vehicle 20 has traveled in accordance with speech guidance, and the number of times the vehicle 20 has not traveled in accordance with speech guidance are collected and stored for learning, whereby a percentage of times that the vehicle 20 has traveled in accordance with speech guidance is determined.

In the example shown in Figs. 3A and 3B, for each of the four types (speech guidance based on an intersection name, speech guidance based on road markings, speech guidance based on a POI landmark, and speech guidance based on a region name) of speech guidance including the additional phrases, at the time that learning data, for example, ten items of the learning data are stored, the learning data is regarded as valid, and a percentage of times that the vehicle 20 turned in accordance with speech guidance is determined. In this example, as shown in Fig. 3A, before learning, priority levels of types of speech guidance are arranged in the order of speech guidance based on an intersection name, speech guidance based on road markings, speech guidance based on a POI landmark, and speech guidance based on a region name. As a result of learning, a percentage of times that the vehicle 20 turned in accordance with speech guidance was 95% for the speech guidance based on a POI landmark, 90% for the speech guidance based on road markings, 88% for the speech guidance based on a region name, and 85% for the speech guidance based on an intersection name. Thus, as shown in Fig. 3B, the priority levels of types of speech guidance are changed in that order.

Next, a process for the above learning and changing priority levels will be described with reference to Fig. 4. In step S1, after a navigation apparatus outputs speech guidance including an additional phrase, it is determined whether a vehicle provided with a navigation apparatus traveled through a guidance branch point along a route. If the vehicle has traveled along the route, in step S2, one is added to the number of times the vehicle has traveled along the route for the spoken additional phrase. If the vehicle did not travel along the route, in step S3, one is added to the number of times the vehicle has not traveled along the route. In step S4, it is determined whether the number of learning data items exceeds a threshold value, for example, ten. If the number of learning data items exceeds the threshold value, in step S5, on the basis of a learning result, the priority levels of the additional phrases for speech guidance are changed in a descending order of percentages of times that the vehicle traveled along the route. In a case where the number of learning data items does not exceed the threshold value, the priority levels are not changed.

It is considered that, in the case of turning at a branch point, each driver has a different preference as to what is used as a main factor, such as a landmark or an intersection name. Therefore, by changing priority levels of additional phrases for speech guidance on the basis of the learning as described above, speech guidance which is not uniform and which meets driver's preference can be performed.
A navigation apparatus performs speech guidance at a guidance branch point on a route by using plural types of speech guidance information which have priority levels assigned thereto. The navigation apparatus includes a determination unit that determines whether a vehicle provided with the navigation apparatus has traveled through the guidance branch point, a learning unit which adds up, for each piece of speech guidance information, the number of times the vehicle has traveled through the guidance branch point in accordance with the speech guidance, and which learns a probability that the vehicle has traveled in accordance with the speech guidance, and a control unit that changes priority levels of pieces of the speech guidance information on the basis of a result of the learning by the learning unit.

## Claims

1. A navigation apparatus for performing speech guidance at a guidance branch point on a route by using plural types of speech guidance information which have priority levels assigned thereto, the navigation apparatus comprising:
determination means for determining whether or not a vehicle provided with the navigation apparatus traveled through the guidance branch point in accordance with the speech guidance;
learning means for adding up, for each type of speech guidance information, the number of times the determination means has determined that the vehicle traveled through the guidance branch point in accordance with the speech guidance, or the number of times the determination means has determined that the vehicle did not travel through the guidance branch point in accordance with the speech guidance, and performing learning of a percentage of times that the vehicle has traveled in accordance with the speech guidance; and
control means for changing the priority levels of the types of speech guidance information on the basis of a result of the learning by the learning means.

2. The navigation apparatus according to Claim 1, wherein, on the basis of whether or not re-searching has been performed, the determination means determines whether or not the vehicle traveled in accordance with the speech guidance.

3. The navigation apparatus according to Claim 1, wherein, on the basis of whether or not a current position of the vehicle lies on the route, the determination means determines whether or not the vehicle traveled in accordance with the speech guidance.

4. The navigation apparatus according to Claim 1, wherein, when a value representing the learning by the learning means exceeds a threshold value, the control means changes the priority levels of the types of speech guidance information.

5. A program for controlling a navigation apparatus for performing speech guidance at a guidance branch point on a route by using plural types of speech guidance information which have priority levels thereto, the program causing a computer to execute the steps of:
determining whether or not a vehicle provided with the navigation apparatus traveled through the guidance branch point in accordance with the speech guidance;
for each type of speech guidance information, adding up the number of times it has been determined that the vehicle traveled through the guidance branch point in accordance with the speech guidance, or the number of times it has been determined that the vehicle did not travel through the guidance branch point in accordance with the speech guidance, and performing learning of a percentage of times that the vehicle has traveled in accordance with the speech guidance; and
changing the priority levels of the types of speech guidance information on the basis of a result of the learning.
